# EUROPEAN PATENT APPLICATION

(11) **EP 4 250 043 A1**
(43) Date of publication of application: **27.09.2023**
(21) Application number: 20965144.7
(22) Date of filing: 11.12.2020
(51) Int. Cl.: G05D 1/02

(54) **SELF-PROPELLED DEVICE**

(71) Applicant: DMG Mori Co., Ltd., Yamatokoriyama-shi, Nara 639-1160 (JP)
(72) Inventor: NAGASUE, Hideki, Yamatokoriyama-shi, Nara 639-1160 (JP); MAEDA, Ryota, Yamatokoriyama-shi, Nara 639-1160 (JP)
(74) Representative: Isarpatent
(86) International application number: PCT/JP2020/046229
(87) International publication number: WO 2022/123762

(57) **Abstract**

An autonomous traveling apparatus (100) includes a traveling body (10) with a wheel to be driven. The traveling body (10) includes a first wheel portion (15) and a second wheel portion (35) each provided along a traveling direction of the autonomous traveling apparatus (100) in the traveling body (10) with a predetermined space being interposed between the first wheel portion (15) and the second wheel portion (35). The second wheel portion (35) has a pair of wheels configured to be movable upward/downward with respect to the autonomous traveling apparatus (100). The autonomous traveling apparatus (100) further includes a laser sensor (105). The laser sensor (105) is configured to detect an object around the laser sensor (105) by emitting laser light while rotating the laser light with respect to the laser sensor (105) and by receiving reflected light of the laser light, and is provided on the traveling body (10) to avoid a portion above each of the pair of wheels such that a scanning plane is lower than a maximum reach point of a range of an upward/downward movement of each of the pair of wheels, the scanning plane being a range in which the laser light passes while rotating the laser light.

## Description

### TECHNICAL FIELD

The present disclosure relates to an autonomous traveling apparatus with a wheel to be driven.

### BACKGROUND ART

In a production system such as a factory, unmanned operation has been desired. In order to realize such unmanned operation, development of an autonomous traveling apparatus has been progressed. The autonomous traveling apparatus conveys a workpiece to be machined, a tool, or the like to each machine tool, and collects a workpiece having been through machining in each machine tool, a tool having been used, or the like.

Japanese Patent Laying-Open No. 2019-8359 (PTL 1) discloses an autonomous traveling apparatus to "create map information in an excellent manner". The autonomous traveling apparatus includes: a distance measurement apparatus that drives to rotate a light projecting unit for emitting projection light and that outputs distance measurement data based on reception of reflected light reflected by a measurement target; a map creating unit that creates map information based on the distance measurement data; and an obstacle sensor that detects an obstacle.

### CITATION LIST

### PATENT LITERATURE

PTL 1: Japanese Patent Laying-Open No. 2019-8359

### SUMMARY OF INVENTION

### TECHNICAL PROBLEM

Traveling of the autonomous traveling apparatus needs to be controlled to avoid an obstacle. Examples of such an obstacle includes an obstacle located at a low position. In the autonomous traveling apparatus disclosed in PTL 1, the obstacle sensor is provided immediately below a top plate portion, with the result that an obstacle located at a low position cannot be detected.

Further, a wheel of the autonomous traveling apparatus is configured to be movable upward/downward in order to absorb an impact during traveling. When a laser sensor is provided above such a wheel, the laser sensor must be provided further above a range of the upward/downward movement of the wheel. In this case, the autonomous traveling apparatus cannot detect an obstacle located at a low position. For this reason, it has been desired that even an autonomous traveling apparatus including a wheel movable upward/downward detects an obstacle located at a low position.

### SOLUTION TO PROBLEM

In one example of the present disclosure, an autonomous traveling apparatus includes a traveling body with a wheel to be driven. The traveling body includes a first wheel portion and a second wheel portion each provided in the traveling body along a traveling direction of the autonomous traveling apparatus with a predetermined space being interposed between the first wheel portion and the second wheel portion. The second wheel portion has a pair of wheels configured to be movable upward/downward with respect to the autonomous traveling apparatus. The autonomous traveling apparatus further includes a first laser sensor. The first laser sensor is configured to detect an object around the first laser sensor by emitting laser light while rotating the laser light with respect to the first laser sensor and by receiving reflected light of the laser light, and is provided on the traveling body to avoid a portion above each of the pair of wheels such that a scanning plane is located lower than a maximum reach point of a range of an upward/downward movement of each of the pair of wheels, the scanning plane being a range in which the laser light passes while rotating the laser light.

In one example of the present disclosure, the first laser sensor is provided between the pair of wheels in a top view of the traveling body.

In one example of the present disclosure, the first wheel portion has a first front wheel and a second front wheel. The pair of wheels are a first rear wheel and a second rear wheel.

In one example of the present disclosure, the autonomous traveling apparatus further includes: a second laser sensor having the same function as a function of the first laser sensor; and a third laser sensor having the same function as the function of the first laser sensor. The second laser sensor is provided on the traveling body so as to be located above the first front wheel. The third laser sensor is provided on the traveling body so as to be located above the second front wheel.

In one example of the present disclosure, a direction of the laser light emitted from the first laser sensor at least includes a backward traveling direction of the autonomous traveling apparatus. A direction of laser light emitted from the second laser sensor at least includes a forward traveling direction of the autonomous traveling apparatus and one direction orthogonal to the forward traveling direction. A direction of laser light emitted from the third laser sensor at least includes the forward traveling direction of the autonomous traveling apparatus and the other direction orthogonal to the forward traveling direction.

In one example of the present disclosure, a height from a ground at the maximum reach point is 200 mm or more. A height of the scanning plane from the ground is 200 mm or less.

In one example of the present disclosure, configuring the pair of wheels to be movable upward/downward includes configuring the pair of wheels to be swingable in a plane orthogonal to the traveling direction of the autonomous traveling apparatus 100.

In one example of the present disclosure, each of the pair of wheels is an omniwheel.

The foregoing and other objects, features, aspects and advantages of the present invention will become more apparent from the following detailed description of the present invention when taken in conjunction with the accompanying drawings.

### BRIEF DESCRIPTION OF DRAWINGS

Fig. 1 is a diagram showing an appearance of an autonomous traveling apparatus.
Fig. 2 is a diagram showing a laser sensor and two-dimensional distance data output from the laser sensor.
Fig. 3 is a diagram showing an overview of an internal structure of a traveling body.
Fig. 4 is a side view of the traveling body.
Fig. 5 is a diagram showing the traveling body in a backward traveling direction B shown in Fig. 3.
Fig. 6 is a diagram showing the traveling body with a right front wheel traveling on a stepped portion.
Fig. 7 is a diagram showing the traveling body with a right rear wheel traveling on a stepped portion.
Fig. 8 is a diagram showing the traveling body and the laser sensor in an upward direction.
Fig. 9 is a side view showing the traveling body and the laser sensor in a side direction.
Fig. 10 is a diagram showing the traveling body and laser sensors in the upward direction.
Fig. 11 is a side view showing the traveling body and the laser sensors in the side direction.
Fig. 12 is a diagram showing an exemplary hardware configuration of the autonomous traveling apparatus.

### DESCRIPTION OF EMBODIMENTS

Hereinafter, embodiments according to the present invention will be described with reference to figures. In the description below, the same parts and components are denoted by the same reference characters. Their names and functions are also the same. Therefore, they will not be described in detail repeatedly. It should be noted that the embodiments and modifications described below may be selectively combined as appropriate.

### <A. Autonomous Traveling Apparatus 100>

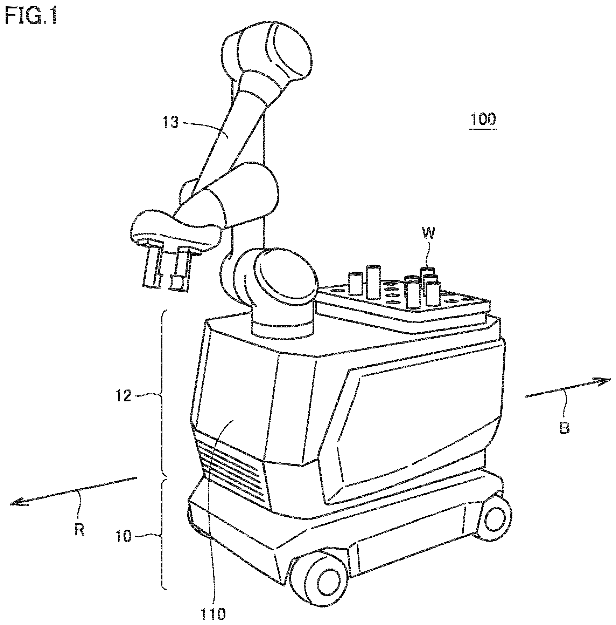

First, an autonomous traveling apparatus 100 will be described with reference to Fig. 1. Fig. 1 is a diagram showing an appearance of autonomous traveling apparatus 100.

Autonomous traveling apparatus 100 conveys a target object, such as a workpiece or tool, to an arbitrary location. Autonomous traveling apparatus 100 includes: a traveling body 10 with a wheel to be driven; a base 12; and an arm robot 13.

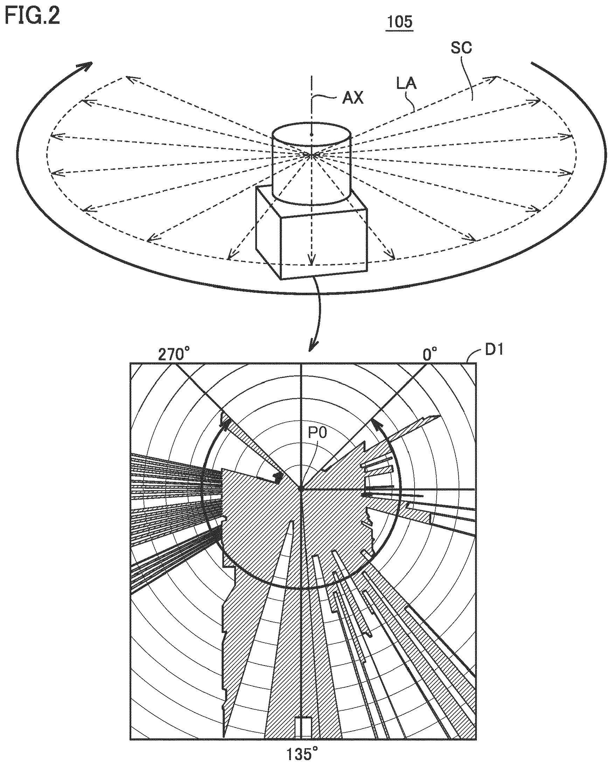

Base 12 is fixed to an upper portion of traveling body 10. Base 12 has a cover 110. A laser sensor 105 (see Fig. 2) described later is provided inside cover 110. Based on a detection result of laser sensor 105, autonomous traveling apparatus 100 controls traveling body 10 to travel in a forward traveling direction R or a backward traveling direction B, turn right, or turn left, etc.

Arm robot 13 is provided on base 12. Further, a placement space for workpieces W is provided on base 12. Arm robot 13 grasps a workpiece W and moves workpiece W to a designated location.

It has been illustratively described above that arm robot 13 driven in four to seven axes is installed on traveling body 10; however, various types of conveying apparatuses can be installed on traveling body 10 so as to convey target objects such as workpieces or tools. The conveying apparatuses may be a robot (for example, an autoloader) driven in two or three axes.

### <B. Laser Sensor 105>

Next, laser sensor 105 provided inside cover 110 of autonomous traveling apparatus 100 will be described with reference to Fig. 2. Fig. 2 is a diagram showing laser sensor 105 and two-dimensional distance data D1 output from laser sensor 105.

Laser sensor 105 is configured to emit laser light LA while rotating laser light LA with respect to a center axis AX of laser sensor 105 and receive reflected light of laser light LA. Accordingly, laser sensor 105 outputs two-dimensional distance data D1 representing a distance to an object therearound for each angle with respect to center axis AX. Two-dimensional distance data D1 represents a distance to each object existing in a scanning plane SC for each emission angle.

More specifically, laser sensor 105 is constituted of an emission unit, a mirror, and a light receiving unit. The emission unit emits laser light to the mirror. The mirror, which is rotatable with respect to center axis AX by a motor (not shown), reflects laser light LA in each direction. Thus, laser sensor 105 emits laser light LA in each direction. When an object is present around laser sensor 105, laser light LA is reflected by the object and returns to laser sensor 105. Laser sensor 105 receives the reflected light at the light receiving unit.

Laser sensor 105 receives the reflected light from the object and calculates a distance to the object. As one example, laser sensor 105 calculates the distance from laser sensor 105 to the object based on a period of time from the emission of laser light LA to the reception of the reflected light of laser light LA. Typically, laser sensor 105 calculates the distance to the object by multiplying the speed of the light by the period of time. Laser sensor 105 outputs two-dimensional distance data D1 representing the distance for each angle with respect to center axis AX by associating the distance with the emission angle of laser light LA.

An angle range of the distance data output by laser sensor 105 is arbitrarily set. In the example of Fig. 2, an angle range of 0° to 270° is set to be enabled.

In the manner described above, laser sensor 105 detects an object around laser sensor 105 by emitting laser light LA while rotating laser light LA with respect to laser sensor 105 and by receiving reflected light of laser light LA.

### <C. Configuration of Traveling Body 10>

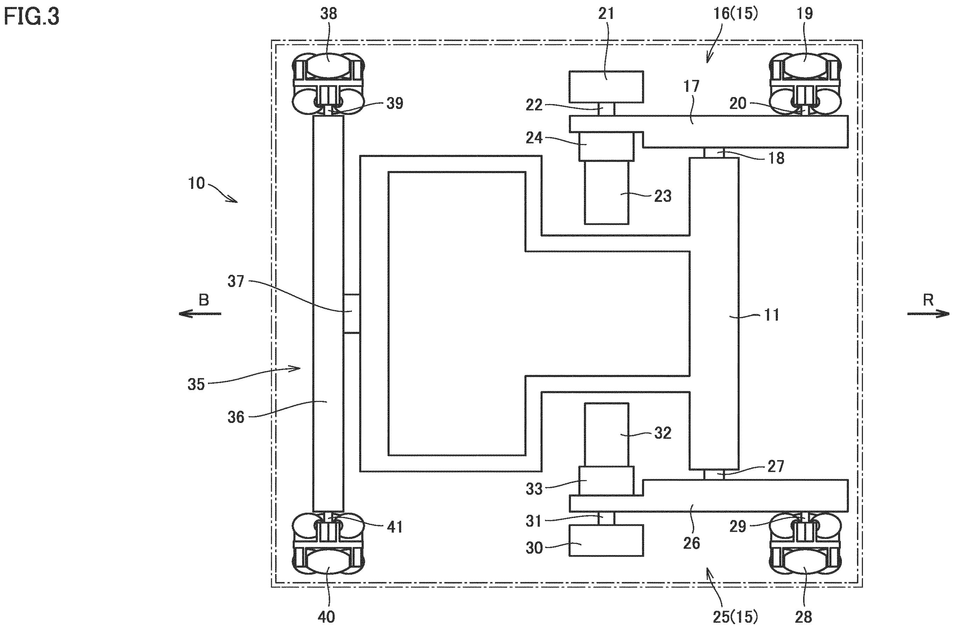

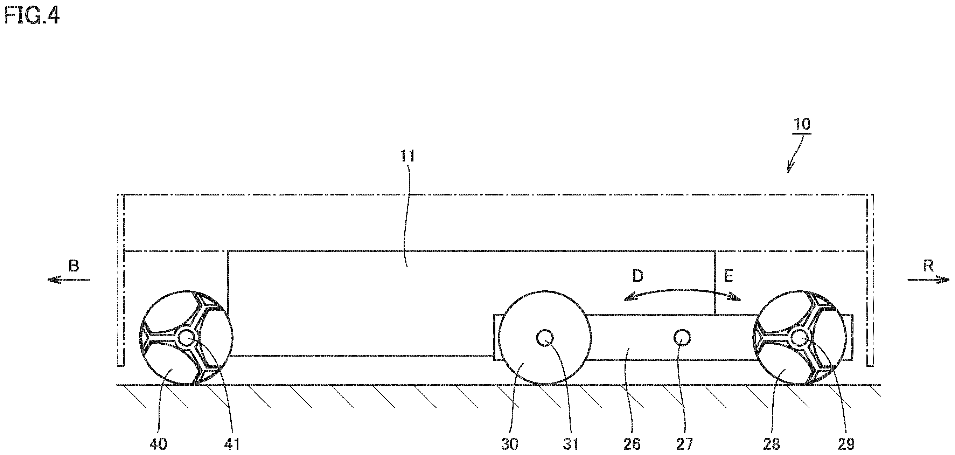

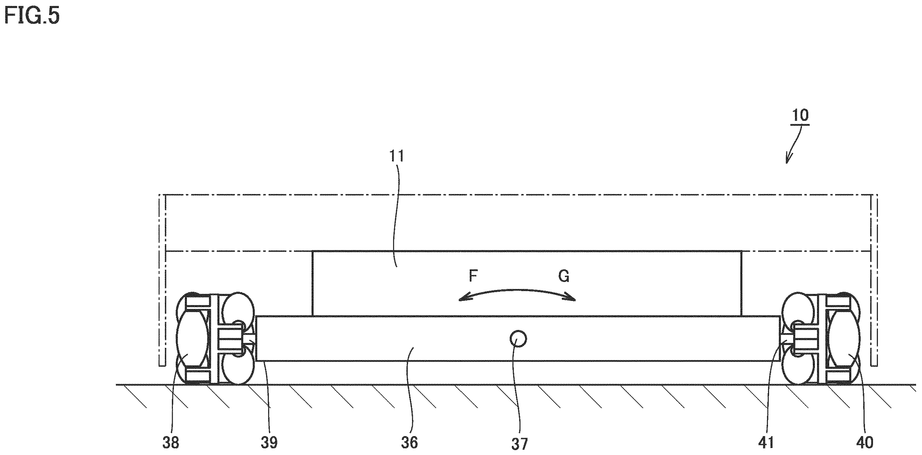

Next, traveling body 10 shown in Fig. 1 will be described with reference to Figs. 3 to 5. Fig. 3 is a diagram showing an overview of an internal structure of traveling body 10. Fig. 4 is a side view of traveling body 10. Fig. 5 is a diagram showing traveling body 10 in backward traveling direction B shown in Fig. 3.

As shown in Figs. 3 to 5, traveling body 10 includes: a frame 11; a first wheel portion 15 functioning as a front wheel; and a second wheel portion 35 functioning as a rear wheel.

Frame 11 has a space appropriately cut out when viewed in plan so as to install a necessary structure therein, and has a hollow internal structure in order to achieve weight reduction.

First wheel portion 15 and second wheel portion 35 are along a traveling direction (direction indicated by an arrow R) and connected to frame 11 with a predetermined space being interposed therebetween. The traveling direction represents the forward traveling direction or backward traveling direction of autonomous traveling apparatus 100.

First wheel portion 15 includes: a first left wheel portion 16 provided on the left side when viewed from the rear surface of autonomous traveling apparatus 100; and a right front wheel portion 25 provided on the right side when viewed from the rear surface of autonomous traveling apparatus 100.

First left wheel portion 16 includes: a first left supporting arm 17 provided at a left side surface of frame 11; a left front wheel 19; and a left driving wheel 21. Left front wheel 19 and left driving wheel 21 are supported by both end portions of first left supporting arm 17 so as to be respectively rotatable about horizontal rotation shafts 20, 22 orthogonal to the traveling direction of autonomous traveling apparatus 100.

Right front wheel portion 25 includes: a first right supporting arm 26 provided on a right side surface of frame 11; a right front wheel 28; and a right driving wheel 30. Right front wheel 28 and right driving wheel 30 are supported by both end portions of first right supporting arm 26 so as to be respectively rotatable about horizontal rotation shafts 29, 31 orthogonal to the traveling direction of autonomous traveling apparatus 100.

First right supporting arm 26 is supported by a supporting shaft 27 provided on the right side surface of frame 11, and is swingable in directions indicated by arrows D-E shown in Fig. 4 in a vertical plane along the traveling direction of autonomous traveling apparatus 100. Similarly, first left supporting arm 17 is supported by a supporting shaft 18 provided on the left side surface of frame 11, and is swingable in the same directions as the directions indicated by arrows D-E in the vertical plane along the traveling direction of autonomous traveling apparatus 100.

It should be noted that in the present example, left front wheel 19 and right front wheel 28 with respect to the traveling direction of autonomous traveling apparatus 100 are non-driving wheels, and left driving wheel 21 and right driving wheel 30 with respect to the traveling direction of autonomous traveling apparatus 100 are driving wheels. A motor 23 is connected to left driving wheel 21 via a speed reducer 24 provided on first left supporting arm 17, and left driving wheel 21 is driven to be rotated by motor 23. Similarly, a motor 32 is connected to right driving wheel 30 via a speed reducer 33 provided on first right supporting arm 26, and right driving wheel 30 is driven to be rotated by motor 32.

Second wheel portion 35 includes a second supporting arm 36 provided on the rear side of frame 11 with respect to the traveling direction of autonomous traveling apparatus 100. Second supporting arm 36 is supported by a supporting shaft 37 provided on the rear side surface of frame 11, and is swingable in directions indicated by arrows F-G shown in Fig. 5 in a vertical plane orthogonal to the traveling direction of autonomous traveling apparatus 100. Second supporting arm 36 includes a left rear wheel 38 and a right rear wheel 40 at its both end portions, left rear wheel 38 and right rear wheel 40 being respectively supported to be rotatable about horizontal rotation shafts 39, 41 orthogonal to the traveling direction of autonomous traveling apparatus 100. Thus, second wheel portion 35 has a pair of wheels (left rear wheel 38 and right rear wheel 40) configured to be swingable in the plane orthogonal to the traveling direction of autonomous traveling apparatus 100. It should be noted that left rear wheel 38 and right rear wheel 40 are non-driving wheels.

Left front wheel 19, right front wheel 28, left rear wheel 38, and right rear wheel 40 have the same configuration, and are each constituted of, for example, an omniwheel. In this case, left front wheel 19 can be rotated about rotation shaft 20 to move in the rotation direction, and can be slid in the horizontal direction intersecting rotation shaft 20 and the rotation direction.

### <D. Manner of Traveling of Traveling Body 10>

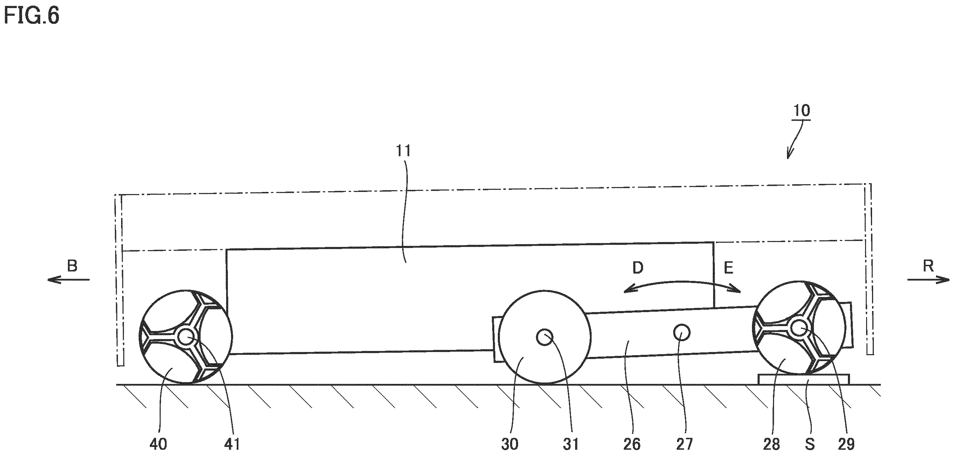

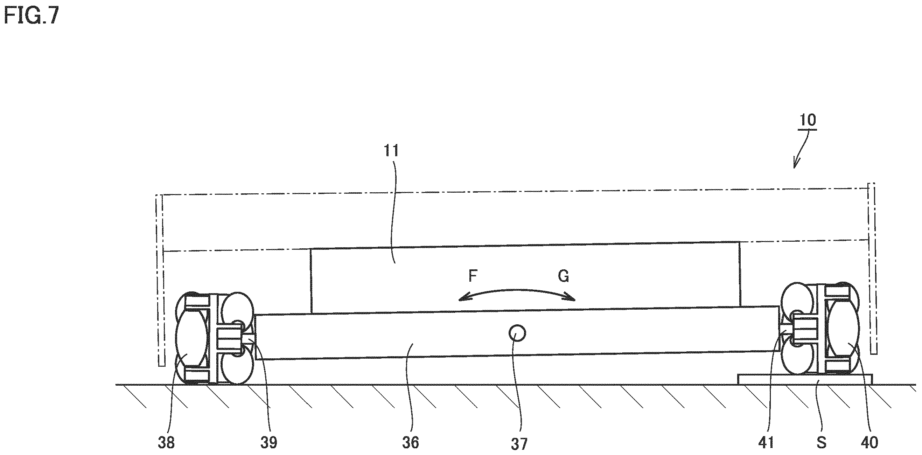

Next, referring to Figs. 6 and 7, the following describes a manner of traveling when autonomous traveling apparatus 100 travels on a step. Fig. 6 is a diagram showing traveling body 10 with right front wheel 28 traveling on a stepped portion S. Fig. 7 is a diagram showing traveling body 10 with right rear wheel 40 traveling on stepped portion S.

As shown in Fig. 6, in the case where autonomous traveling apparatus 100 travels in a factory, when right front wheel 28 travels on stepped portion S provided in the factory, first right supporting arm 26 is swung in the direction indicated by arrow D. Thus, all the wheels, i.e., right driving wheel 30 serving as a driving wheel, left front wheel 19, left driving wheel 21, right front wheel 28, left rear wheel 38, and right rear wheel 40 are maintained to be in contact with a ground. On the other hand, when right driving wheel 30 travels on stepped portion S, first right supporting arm 26 is swung in the direction indicated by arrow E. Thus, all the wheels, i.e., left front wheel 19, left driving wheel 21, right front wheel 28, right driving wheel 30, left rear wheel 38, and right rear wheel 40 are maintained to be in contact with the ground.

Similarly, when left front wheel 19 travels on stepped portion S, first left supporting arm 17 is swung in the direction indicated by arrow D. Thus, all the wheels, i.e., left driving wheel 21 serving as a driving wheel, left front wheel 19, right front wheel 28, right driving wheel 30, left rear wheel 38, and right rear wheel 40 are maintained to be in contact with the ground. When left driving wheel 21 travels on stepped portion S, first left supporting arm 17 is swung in the direction indicated by arrow E. Thus, all the wheels, i.e., left front wheel 19, left driving wheel 21, right front wheel 28, right driving wheel 30, left rear wheel 38, and right rear wheel 40 are maintained to be in contact with the ground.

As shown in Fig. 7, when right rear wheel 40 travels on stepped portion S, second supporting arm 36 is swung in the direction indicated by arrow F. Thus, all the wheels, i.e., left front wheel 19, left driving wheel 21, right front wheel 28, right driving wheel 30, left rear wheel 38, and right rear wheel 40 are maintained to be in contact with the ground. On the other hand, when left rear wheel 38 travels on stepped portion S, second supporting arm 36 is swung in the direction indicated by arrow G. Thus, all the wheels, i.e., left front wheel 19, left driving wheel 21, right front wheel 28, right driving wheel 30, left rear wheel 38, and right rear wheel 40 are maintained to be in contact with the ground.

Thus, according to autonomous traveling apparatus 100 of the present example, even when stepped portion S is present on the ground and one or more of left front wheel 19, left driving wheel 21, right front wheel 28, right driving wheel 30, left rear wheel 38, and right rear wheel 40 travel on stepped portion S, corresponding supporting arm(s) of first left supporting arm 17, first right supporting arm 26, and second supporting arm 36 are swung to absorb the step and all the wheels are maintained to be in contact with the ground, with the result that autonomous traveling apparatus 100 can travel in a stable state.

### <E. Installation Position for Laser Sensor 105>

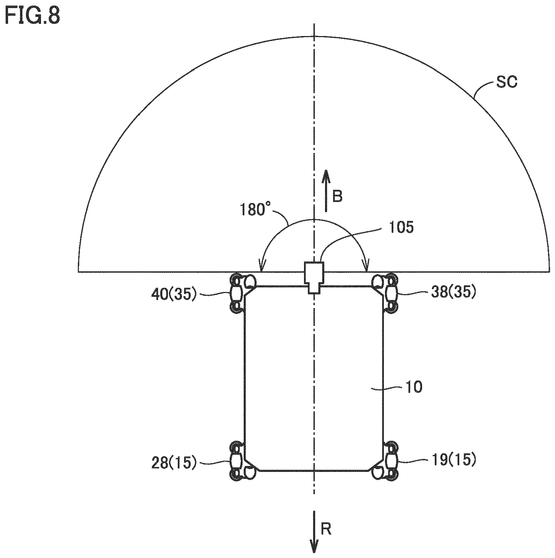

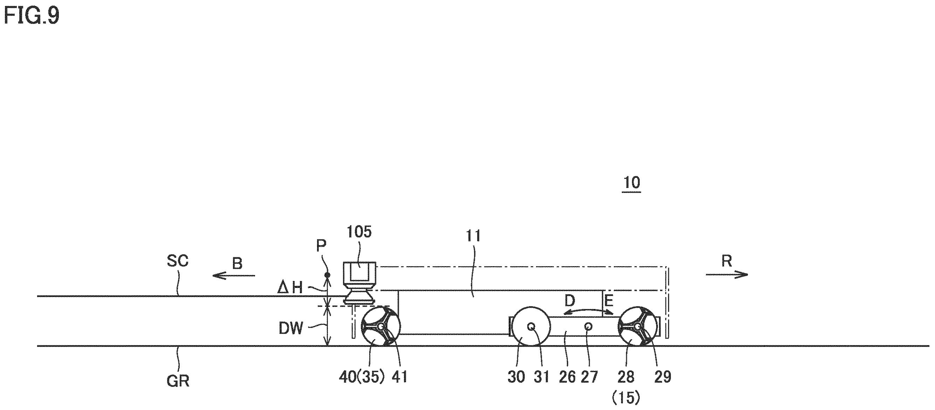

Next, an installation position for laser sensor 105 in autonomous traveling apparatus 100 will be described with reference to Figs. 8 and 9. Fig. 8 is a diagram showing traveling body 10 and laser sensor 105 in an upward direction. Fig. 9 is a side view of traveling body 10 and laser sensor 105 in a side direction.

As described above, first wheel portion 15 includes the pair of wheels constituted of left front wheel 19 and right front wheel 28. Second wheel portion 35 includes the pair of wheels constituted of left rear wheel 38 and right rear wheel 40. As described with reference to Figs. 4 to 7, left front wheel 19, right front wheel 28, left rear wheel 38, and right rear wheel 40 are each configured to be movable upward/downward. In the present specification, the concept of "upward/downward movement" can include not only swinging but also a movement only in the upward/downward direction and other movements each involving a change in position in the upward/downward direction.

In order for such an autonomous traveling apparatus 100 to detect an obstacle (hereinafter, also referred to as "low obstacle") located at a low position, laser sensor 105 needs to be provided on traveling body 10 to avoid a range of the upward/downward movement of each of the wheels.

Accordingly, laser sensor 105 is provided on traveling body 10 to avoid a portion above each of the pair of wheels such that scanning plane SC for laser light LA is located lower than a maximum reach point P of the range of the upward/downward movement of each of the pair of wheels. The "pair of wheels" herein represent a concept including the pair of left front wheel 19 and right front wheel 28, and the pair of left rear wheel 38 and right rear wheel 40.

That is, laser sensor 105 may be provided between left front wheel 19 and right front wheel 28, or may be provided between left rear wheel 38 and right rear wheel 40, in a top view of traveling body 10. Fig. 8 shows an example in which laser sensor 105 is provided between left rear wheel 38 and right rear wheel 40 in a top view of traveling body 10.

More specifically, when the diameter of each of left rear wheel 38 and right rear wheel 40 is represented by "DW" and the range of movement of each of left rear wheel 38 and right rear wheel 40 in the upward/downward direction is represented by "ΔH", a maximum reach point P of each of left rear wheel 38 and right rear wheel 40 is "DW+ΔH". In this case, laser sensor 105 is provided on traveling body 10 such that scanning plane SC is lower than "DW+ΔH". Thus, autonomous traveling apparatus 100 can detect an obstacle located at a position lower than maximum reach point P of each of left rear wheel 38 and right rear wheel 40.

Typically, laser sensor 105 is provided on traveling body 10 such that scanning plane SC is parallel to ground GR. As one example, a detection range of laser sensor 105 is set such that scanning plane SC excludes traveling body 10. The detection range of laser sensor 105 is, for example, about 180° with the traveling body 10 side being excluded.

Preferably, a height from ground GR at maximum reach point P is 200 mm or more, and a height of scanning plane SC from ground GR is 200 mm or less. Thus, autonomous traveling apparatus 100 can detect a low obstacle located at a position of 200 mm or less. In particular, in "ISO3691-4, Section 5.2", it is required to detect a low obstacle having a diameter (height) of 200 mm and a length of 600 mm. Autonomous traveling apparatus 100 can also detect such a low obstacle.

Autonomous traveling apparatus 100 controls the traveling of traveling body 10 based on the detection result of the obstacle by laser sensor 105.

In a certain aspect, in the case where a low obstacle is detected by laser sensor 105, autonomous traveling apparatus 100 controls the traveling of autonomous traveling apparatus 100 so as to avoid the low obstacle.

In another aspect, in the case where a low obstacle is detected by laser sensor 105, autonomous traveling apparatus 100 stops the traveling of traveling body 10.

In another aspect, in the case where a low obstacle is detected by laser sensor 105, autonomous traveling apparatus 100 controls the traveling of autonomous traveling apparatus 100 so as to avoid the low obstacle when a distance to the low obstacle is equal to or more than a predetermined distance, and stops the traveling of autonomous traveling apparatus 100 when the distance to the low obstacle is less than the predetermined distance.

It has been illustratively described above that one laser sensor 105 is provided on autonomous traveling apparatus 100; however, any number of laser sensors 105 may be provided. At least one laser sensor 105 should be provided between left front wheel 19 and right front wheel 28, between left rear wheel 38 and right rear wheel 40, between left front wheel 19 and left rear wheel 38, or between right front wheel 28 and right rear wheel 40.

### <F. Modification>

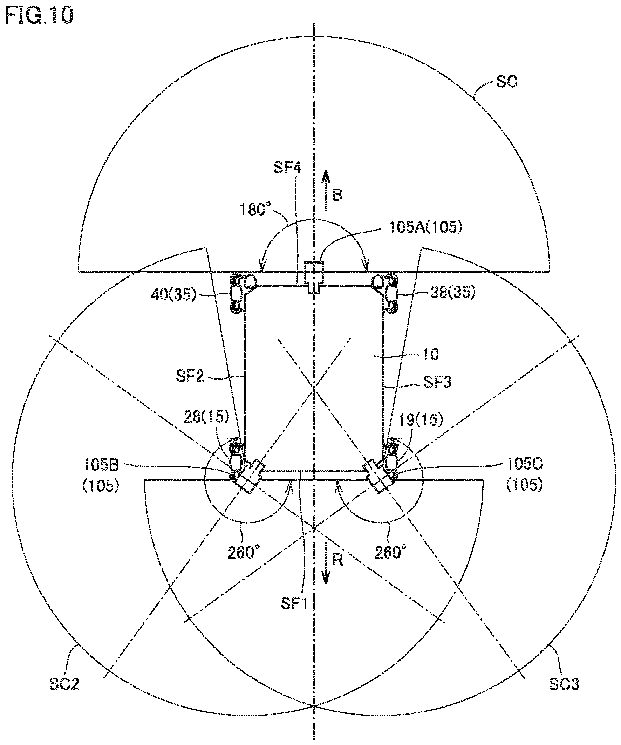

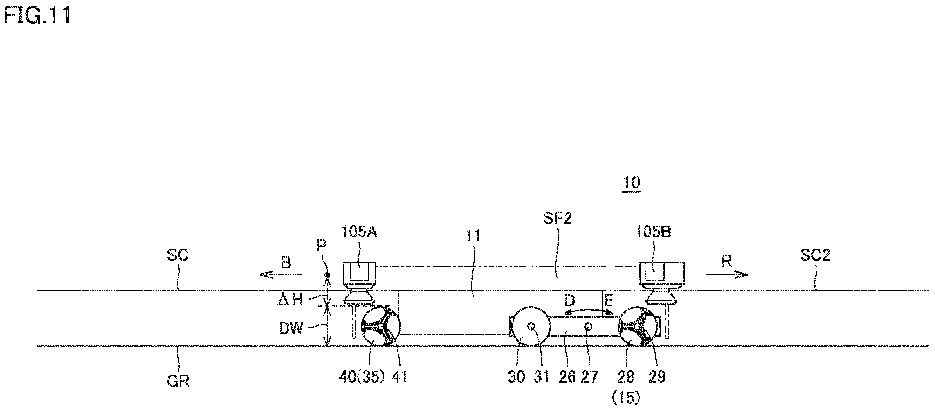

Next, a modification of autonomous traveling apparatus 100 will be described with reference to Figs. 10 and 11. Fig. 10 is a diagram showing traveling body 10 and laser sensors 105A to 105C in the upward direction. Fig. 11 is a diagram showing traveling body 10 and laser sensors 105A to 105C in the side direction.

Autonomous traveling apparatus 100 shown in Figs. 8 and 9 as described above includes one laser sensor 105. On the other hand, autonomous traveling apparatus 100 according to the present modification includes three laser sensors 105A to 105C.

The function and structure of each of laser sensors 105A to 105C are the same as those of laser sensor 105 (see Fig. 2) described above, and therefore will not be described repeatedly.

An installation position for laser sensor 105A is the same as that for laser sensor 105 shown in Figs. 8 and 9, and therefore will not be described repeatedly.

Hereinafter, the surface of traveling body 10 when viewed in the forward traveling direction of autonomous traveling apparatus 100 is referred to as a "front surface SF1". Further, the right surface of traveling body 10 when viewed in the backward traveling direction of autonomous traveling apparatus 100 is referred to as a "right surface SF2". Further, the left surface of traveling body 10 when viewed in the backward traveling direction of autonomous traveling apparatus 100 is referred to as a "left surface SF3". Further, the surface of autonomous traveling apparatus 100 when viewed in the backward traveling direction of autonomous traveling apparatus 100 is referred to as a "rear surface SF4".

Laser sensor 105B (second laser sensor) is provided on traveling body 10 so as to be located above right front wheel 28. In other words, laser sensor 105B is disposed to overlap with at least a portion of right front wheel 28 in a top view of traveling body 10.

Laser sensor 105B is provided on traveling body 10 such that a scanning plane SC2 for output laser light is parallel to the ground. Preferably, a detection range of laser sensor 105B is set such that scanning plane SC2 excludes traveling body 10. As one example, the detection range of laser sensor 105B is about 260° (for example, 250° to 270°) with a right front corner portion of traveling body 10 being excluded. Thus, laser sensor 105B can detect an obstacle on the front surface SF1 side and an obstacle on the right surface SF2 side.

Laser sensor 105C (third laser sensor) is provided on traveling body 10 so as to be located above left front wheel 19. In other words, laser sensor 105C is disposed to overlap with at least a portion of left front wheel 19 in a top view of traveling body 10.

Laser sensor 105C is provided on traveling body 10 such that a scanning plane SC3 for output laser light is parallel to the ground. Preferably, a detection range of laser sensor 105C is set such that scanning plane SC3 excludes traveling body 10. As one example, the detection range of laser sensor 105C is 260° (for example, 250° to 270°) with a left front corner portion of traveling body 10 being excluded. Thus, laser sensor 105C can detect an obstacle on the front surface SF1 side and an obstacle on the left surface SF3 side.

As described above, the direction of the laser light emitted from laser sensor 105A at least includes backward traveling direction B of autonomous traveling apparatus 100. The direction of the laser light emitted from laser sensor 105B at least includes forward traveling direction R of autonomous traveling apparatus 100 and one direction orthogonal to forward traveling direction R. The direction of the laser light emitted from laser sensor 105C at least includes forward traveling direction R of autonomous traveling apparatus 100 and the other direction orthogonal to forward traveling direction R. Thus, autonomous traveling apparatus 100 can detect an obstacle present in the surroundings of 360°.

It should be noted that the installation positions for laser sensors 105A to 105C are not limited to those in the example shown in Figs. 10 and 11. As one example, laser sensor 105A may be provided between left front wheel 19 and right front wheel 28, laser sensor 105B may be provided above left rear wheel 38, and laser sensor 105C may be provided above right rear wheel 40.

It has been illustratively described above that three laser sensors 105A to 105C are provided on autonomous traveling apparatus 100; however, four laser sensors may be provided on autonomous traveling apparatus 100. In this case, a first laser sensor is provided between left front wheel 19 and right front wheel 28, a second laser sensor is provided between left front wheel 19 and left rear wheel 38, a third laser sensor is provided between right front wheel 28 and right rear wheel 40, and a fourth laser sensor is provided between left rear wheel 38 and right rear wheel 40. Each of the four laser sensors is provided at a position at which the traveling plane is lower than maximum reach point P of each of the wheels.

### <G. Hardware Configuration of Autonomous Traveling Apparatus 100>

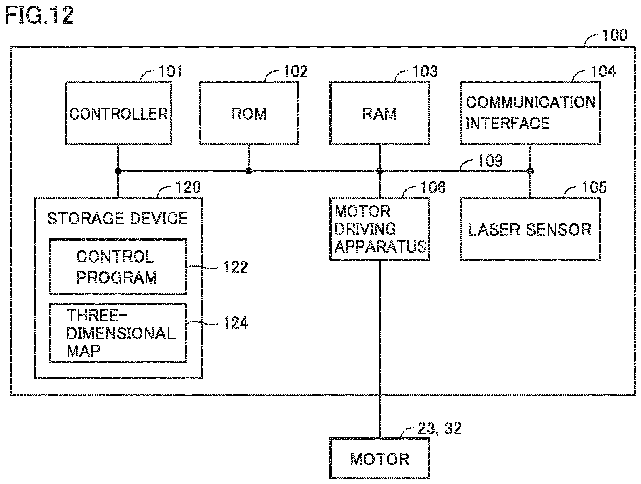

Next, a hardware configuration of autonomous traveling apparatus 100 will be described with reference to Fig. 12. Fig. 12 is a diagram showing an exemplary hardware configuration of autonomous traveling apparatus 100.

Autonomous traveling apparatus 100 includes a controller 101, a ROM (Read Only Memory) 102, a RAM (Random Access Memory) 103, a communication interface 104, laser sensor 105 (see Fig. 2) described above, a motor driving apparatus 106, and a storage device 120. These components are connected to a bus 109.

Controller 101 is constituted of, for example, at least one integrated circuit. The integrated circuit may be constituted of, for example, at least one CPU (Central Processing Unit), at least one GPU (Graphics Processing Unit), at least one ASIC (Application Specific Integrated Circuit), at least one FPGA (Field Programmable Gate Array), or a combination thereof. As one example, controller 101 is a PLC (Programmable Logic Controller).

Controller 101 controls operations of autonomous traveling apparatus 100 by executing various types of programs such as a control program 122 and an operating system. Controller 101 reads control program 122 from storage device 120 or ROM 102 to RAM 103 based on reception of an instruction for executing control program 122. RAM 103 functions as a working memory and temporarily stores various types of data necessary for the execution of control program 122.

A LAN (Local Area Network), an antenna, or the like is connected to communication interface 104. Autonomous traveling apparatus 100 implements wireless communication or wired communication with an external device via communication interface 104. Examples of the external device include: a server (not shown); a user terminal (not shown) for operating autonomous traveling apparatus 100; and the like. The user terminal is, for example, a tablet terminal or a smartphone. The user can control the traveling of autonomous traveling apparatus 100 via the user terminal.

Motor driving apparatus 106 controls the rotation of motors 23, 32 (see Fig. 3) in accordance with a control command from controller 101. Examples of the control command includes: a command for forward rotation of each of motors 23, 32; a command for reverse rotation of each of motors 23, 32; a rotation speed of each of motors 23, 32; and the like. For each of motors 23, 32, a stepping motor, a servo motor, or the like is employed, for example.

Storage device 120 is, for example, a storage medium such as a hard disk or a flash memory. Storage device 120 stores: control program 122 for controlling the traveling of autonomous traveling apparatus 100; a three-dimensional map 124 for defining a traveling route of autonomous traveling apparatus 100; and the like. A storage location for control program 122 and three-dimensional map 124 is not limited to storage device 120, and they may be stored in a storage area (for example, a cache memory or the like) of controller 101, ROM 102, RAM 103, an external device (for example, a server), or the like.

Control program 122 may be provided to be incorporated in a part of an arbitrary program, rather than a single program. In this case, the process of controlling the traveling of autonomous traveling apparatus 100 by control program 122 is implemented in cooperation with the arbitrary program. Even such a program that does not include part of modules is not deviated from the gist of control program 122 according to the present embodiment. Further, part or whole of the functions provided by control program 122 may be implemented by dedicated hardware. Further, autonomous traveling apparatus 100 may be configured to employ a manner of a so-called cloud service in which at least one server performs part of the process of control program 122.

### <H. Conclusion>

As described above, laser sensor 105 is provided on traveling body 10 to avoid a portion above each of the pair of wheels such that scanning plane SC for laser light LA is located lower than maximum reach point P of the range of the upward/downward movement of each of the pair of wheels. Thus, autonomous traveling apparatus 100 can detect an obstacle located at a position lower than maximum reach point P of each of left rear wheel 38 and right rear wheel 40.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

10: traveling body; 11: frame; 12: base; 13: arm robot; 15: first wheel portion; 16: first left wheel portion; 17: first left supporting arm; 18, 27, 37: supporting shaft; 19: left front wheel; 20, 22, 29, 31, 39, 41: rotation shaft; 21: left driving wheel; 23, 32: motor; 24, 33: speed reducer; 25: right front wheel portion; 26: first right supporting arm; 28: right front wheel; 30: right driving wheel; 35: second wheel portion; 36: second supporting arm; 38: left rear wheel; 40: right rear wheel; 100: autonomous traveling apparatus; 101: controller; 102: ROM; 103: RAM; 104: communication interface; 105, 105A, 105B, 105C: laser sensor; 106: motor driving apparatus; 109: bus; 110: cover; 120: storage device; 122: control program; 124: three-dimensional map.

## Claims

1. An autonomous traveling apparatus comprising a traveling body with a wheel to be driven, wherein
the traveling body includes a first wheel portion and a second wheel portion each provided in the traveling body along a traveling direction of the autonomous traveling apparatus with a predetermined space being interposed between the first wheel portion and the second wheel portion, and
the second wheel portion has a pair of wheels configured to be movable upward/downward with respect to the autonomous traveling apparatus,
the autonomous traveling apparatus further comprising a first laser sensor, wherein
the first laser sensor is configured to detect an object around the first laser sensor by emitting laser light while rotating the laser light with respect to the first laser sensor and by receiving reflected light of the laser light, and
the first laser sensor is provided on the traveling body to avoid a portion above each of the pair of wheels such that a scanning plane is located lower than a maximum reach point of a range of an upward/downward movement of each of the pair of wheels, the scanning plane being a range in which the laser light passes while rotating the laser light.

2. The autonomous traveling apparatus according to claim 1, wherein the first laser sensor is provided between the pair of wheels in a top view of the traveling body.

3. The autonomous traveling apparatus according to claim 1 or 2, wherein
the first wheel portion has a first front wheel and a second front wheel, and
the pair of wheels are a first rear wheel and a second rear wheel.

4. The autonomous traveling apparatus according to claim 3, further comprising:
a second laser sensor having the same function as a function of the first laser sensor; and
a third laser sensor having the same function as the function of the first laser sensor, wherein
the second laser sensor is provided on the traveling body so as to be located above the first front wheel, and
the third laser sensor is provided on the traveling body so as to be located above the second front wheel.

5. The autonomous traveling apparatus according to claim 4, wherein
a direction of the laser light emitted from the first laser sensor at least includes a backward traveling direction of the autonomous traveling apparatus,
a direction of laser light emitted from the second laser sensor at least includes a forward traveling direction of the autonomous traveling apparatus and one direction orthogonal to the forward traveling direction, and
a direction of laser light emitted from the third laser sensor at least includes the forward traveling direction of the autonomous traveling apparatus and the other direction orthogonal to the forward traveling direction.

6. The autonomous traveling apparatus according to any one of claims 1 to 5, wherein
a height from a ground at the maximum reach point is 200 mm or more, and
a height of the scanning plane from the ground is 200 mm or less.

7. The autonomous traveling apparatus according to any one of claims 1 to 6, wherein configuring the pair of wheels to be movable upward/downward includes configuring the pair of wheels to be swingable in a plane orthogonal to the traveling direction of the autonomous traveling apparatus 100.

8. The autonomous traveling apparatus according to any one of claims 1 to 7, wherein each of the pair of wheels is an omniwheel.
